# EUROPEAN PATENT APPLICATION

(11) **EP 0 916 884 A2**
(43) Date of publication of application: **19.05.1999**
(21) Application number: 98309103.4
(22) Date of filing: 06.11.1998
(51) Int. Cl.: F16L 17/06

(54) **Cushion member for joint**

(30) Priority: 12.11.1997 JP 325165/97
(71) Applicant: Musashino Kikou Company, Limited, Kodairashi, Tokyo 187-0043 (JP)
(72) Inventor: Ogihara, Takehiko, Hoya-shi, Tokyo 202-0023 (JP); Tominaga, Sadasuke, Isehara-shi, Kanagawa-ken 259-1132 (JP); Kimoto, Jun-ichi, Sakado-shi, Saitama-ken 350-0274 (JP); Taguchi, Hajime, Isehara-shi, Kanagawa-ken 259-1132 (JP)
(74) Representative: Vleck, Jan Montagu

(57) **Abstract**

The structure of the joint between co-operating cushioning elements 2a, 2b, is in that a ridge defining a cushioning member 2 bulged at the top thereof is formed at one end and a groove 24 corresponding to said ridge at the other end and said ridge and said groove are integrated by engaging them. By the integration, the strength of the joint is increased. In the case of jointing a plurality of arcuate members 2a, 2b to form the cushion member 2, the arcuate members differ in hardness among them are used arranging the softest arcuate members 2a at the portion where the compressive deformation is the largest. This suppresses an excessive concentration of stress at the pipe joint portion in curved jacking. The sectional shape of the cushion member 2 is in that at least one side of the cushion member 2 is uneven having a slope, a groove or a stepped portion.

## Description

The invention relates to a cushion member to be mounted at the joint portion of jacking-pipes used in sewerage pipe-jacking. As a jacking-pipe , a reinforced concrete is commonly used.

In pipe-jacking, a tunnel or passage for an underground pipe is created as the pipe is laid.

A leading pipe provided with cutters and an earth removal system is set against the wall of, for example, a shaft, and pushed into the earth by a jacking force provided by a jacking force machine. The earth dug out by the cutters on the leading pipe is fed back to the shaft for dumping.

When the leading pipe has travelled into the earth, a jacking-pipe is set behind the leading pipe and the jacking force applied to it.

The leading pipe and jacking-pipe set behind it are then pushed forward into the earth and further jacking-pipes are set behind embedded jacking-pipes as these are moved forward by the jacking machine.

When the leading pipe reaches its target, for example a target shaft, the leading pipe is removed and recovered. The jacking pipes are left in place to form an, for example, underground pipe. Pipe-jacking is typically used to lay concrete sewerage pipes.

Cushion members are placed between successive lengths of jacking pipe as these are laid. These cushion members are a critical component and their deformation characteristics influence the effectiveness of an installed pipe.

During construction, the cushion members should transmit the jacking-force uniformly to the jacking-pipe by absorbing irregularities on the end face of a jacking pipe, and should disperse the concentrated stress generated during an acentric jacking operation. Furthermore, recent requirements include long-distance jacking and curved jacking as well as the ability to deal with the problems posed by vibration, noise, traffic and environmental regulations.

Known cushion members are made of plastic, synthetic rubber, plywood or particle board by forming the material into a ring or arcuate shape. The cushion member of this kind is usually manufactured by punching a plate material, and unnecessary odds and ends are always produced, so that the cushion member cannot be manufactured at a reasonable cost. In the case of a jacking-pipe of a large pipe diameter of more than 900 mm, the cushion member is difficult to be formed directly into a ring shape by punching a plate material, and so arcuate members from which a cushion member to be assembled are made. And a plurality of these arcuate members are struck on the end face of the jacking-pipe forming a ring conforming to the pattern of the end face. Fig. 9 shows an example, in which quartered arcuate members 33 are stuck to the end face of the jacking-pipe 1 with adhesive to form a cushion member 13 at the execution of pipe-jacking. Fig. 10 shows the detail of one example of the section of the jointed portion of the jacking-pipes 1. Reference numeral 14 designates the end face of the pipe and numeral 15, a collar, and 16, a sealing member, and numeral 17, a water-selling rubber. A cushion member 13 is usually formed as a common plate having same thickness. When a plurality of arcuate members 33 are put together to form a cushion member 13, as shown in Fig. 9, those having an identical hardness are used.

In prior art, the end portions 33a of component arcuate members 33 are just brought into contact and stuck to the end face 14 of the jacking-pipe 1 to form a cushion member 13, in other words, no especial measure is taken to the joints as shown in Fig. 9, in prosecution of pipe-jacking. So when the pushing force of the pipe-jacking action is applied to the cushion member 13, the arcuate members 33 are deformed and peeled at the joints and pushed out into the pipe 1. Due to the large deformation of the cushion member 13, moreover, a high shearing or tensile stress would be caused at the jointed end faces 14 of the jacking-pipes 1 to damage the end faces.

In recent years, long distance jacking and curved jacking owing to improved design and construction technologies have become practised widely. When the jacking-pipes are employed for the curved jacking, the stress distribution on the joint faces of the pipes is so extremely uneven that only a portion of the joint faces has to bear the jacking force. Fig. 11 shows an example in which jacking-pipes 1 are jointed at an angle in the case of curved jacking. Since the joint angle is large in this example, the cushion member transmits the jacking force only at its lower side, a region E shaded by dotted lines as shown in Fig. 9. The stress generated in the cushion member is substantially proportional to the compressive strain, so that the higher compressive stress is generated at the lower side. On the joint end faces of the jacking-pipes, an excessive stress rises likewise only at the lowermost end to increase the possibility of breakage of the end faces greatly.

Moreover, the cushion member of the prior art is so formed as to have a usual rectangular cross section. When the cushion member is compressed and deformed at the joint portion of the pipes, a shrinkage occurs in the compressive direction, and an elongated occurs at right angle with respect to the shrinking direction in accordance with Poisson's ratio. As a result, a shearing stress would occur on the end faces of the pipes to break the pipe end faces. Fig. 12 shows the employment of the cushion member 13 in the joint portion of the jacking-pipes 1, and the left-hand side figure shows the case before the compressive force is applied whereas the right-hand side shows when the compressive force is applied. Upon application of the compressive force, the cushion member 13 is deformed to become thinner and to elongate in the direction perpendicular to the compressive force, i.e. in parallel with the end face. As a result, parallel forces are applied to the pipe end faces, as indicated by arrows on the right-hand side of Fig. 12. Thus, the shearing force acts on the pipe end faces.

The invention has been made to solve the aforementioned problems. Specifically, the cushion member of the invention eliminates the weak points of the joint thereby to enhance the resistance to the external force, and reduces the shearing stress by the Poisson's ratio to prevent the pipe end faces from being broken, and suppresses an excessive stress during curved jacking to prevent the breakage of the pipe joint portion. Moreover, the cushion member can be easily manufactured without any waste of material and number of the joints of the cushion member providing the weak point can also be minimized.

According to one aspect of the invention, there is provided a cushion member mounted on the end faces of the jacking pipes to be joined with each other. One end portion of the cushion member has a ridge preferably bulging at the top thereof and the other end portion of the cushion member has a groove so shaped as to correspond to the shape of said ridge, so that both end portions of said cushion member are integrated by engaging said ridge and said groove to form a circular band conforming to the shape of the end face of the jacking-pipe. Thus, the strength of the joint against the external face is increased.

According to another aspect of the invention, there is also provided a cushion member for the jacking-pipe, adapted to be mounted on the end face of the jacking-pipe and formed into a circular shape by jointing a plurality of arcuate members, characterised in that the arcuate members having different hardness are combined such that the softest arcuate member is arranged at the portion where the compressive force becomes the largest during curved jacking. The softest arcuate member is arranged at the portion where the compressive force becomes the largest, so that the arcuate member of the portion become liable to deform thereby reducing the stress produced, and the deformation of the cushion member is increased to enlarge the area for transmitting the compressive force, so that an excessive stress is suppressed to prevent the breakage of the pipe joint portion. In this case, the joint can be formed by engaging the ridge and the groove, as described above.

According to another aspect of the invention, moreover, there is provided a cushion member for the jacking-pipe, characterised in that at least one face is not flat by having a slope, a groove or a stepped portion. Since the one face is not flat, when the cushion member is compressively deformed during pipe-jacking by the compressive force, the deformed portion is not constrained but can change the shape freely, so that the shearing force by the Poisson's ratio is less than that of the flat face.

Preferably a mode other than the flat face, the sectional shape of the cushion member in the axial direction can be such that the thickness is thinner toward one end or both end portions of a trapezoid shape or a shape having grooves or step portions.

For curvilinear or curved pipe-jacking, if the end portion of the outer circumferential side of the cushion member is thinner toward the distal end in the sectional shape in the axial direction, the contact area between the cushion member and the end faces of the mating jacking-pipes can be enlarged to suppress the excessive stress, thereby preventing the pipe joint portions from being broken. In the straight pipe-jacking, the portion extending from the center to the inner circumferential end portion is desirably flat or tapered. When the cushion member is formed into a trapezoid shape thicker on the inner circumferential side, a shown in Fig.8, it is suited for curved pipe-jacking. In the straight pipe-jacking, however, an inward force is generated as indicated by arrows D, causing the cushion member to protrude into the inside. This inward force is not generated if the cushion member is flat or tapered from the center to the inner circumferential end portion.

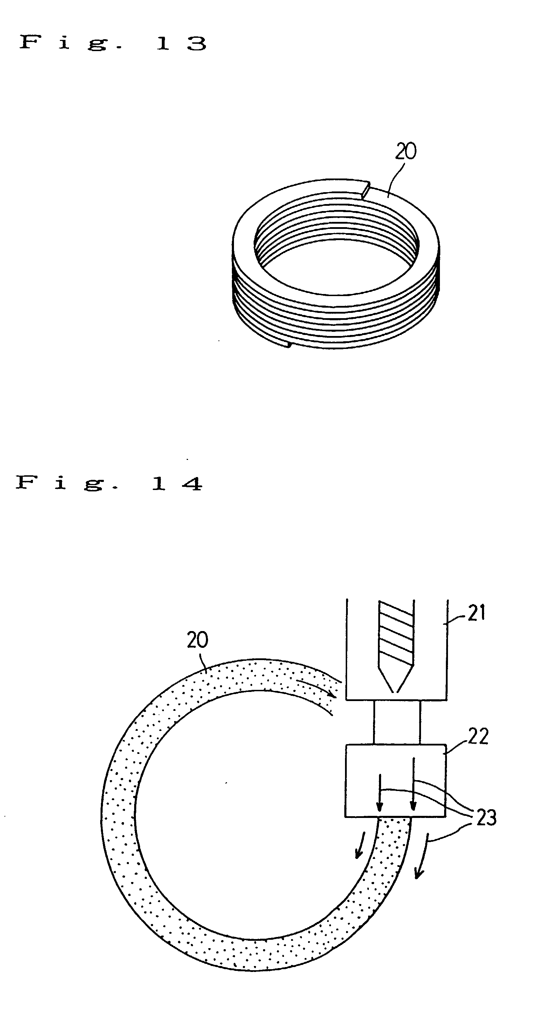

According to another aspect of the invention, moreover, there is provided a cushion member for a jacking-pipe, characterized in that the cushion member is manufactured out of a long helical or ring shape band which is formed by extrusion molding using a single substance of plastic, rubber or elastomer, or their compound as a material. This cushion member is manufactured cutting the product by the extrusion molding and so can be made of an extrusion molding material such as any one of a variety of thermoplastic resins, synthetic rubber or elastomer. With one of these materials, additives such as a thermoset resin, a foaming agent, a plasticizer, a coloring agent, a filler or a stabilizer can be suitably mixed. Especially by adding a foaming agent to adjust the expansion ratio, there can be produced a cushion member having a desired hardness. This cushion member is manufactured by extrusion molding, so that it can be produced at a reasonable cost without producing much waste material. Since the cushion member can easily be a large size to have a large diameter, moreover, even the number of joints which form the weak points of the large-sized cushion member can be minimized even to one. If a plurality of turns are continuously extrusion-molded, a helical product, as shown in Fig. 13 can be manufactured, and the turns are cut out one by one in execution of pipe-jacking. The cushion member of the invention having one joint is obtained by cutting out the turns one by one and jointing the both ends of the resulted material.

The invention will be described in detail in connection with its embodiments with reference to the accompanying drawings.
Fig. 1 is a front elevation of a cushion member 2 of an embodiment, mounted on a jacking-pipe 1;
Fig. 2 is a section of an essential portion of Fig. 1;
Fig. 3 is an explanatory figure showing the stress distribution of a cushion member in a curved pipe-jacking case;
Fig. 4 is an explanatory figure of a jointed state of a jacking-pipe in the curved jacking case;
Fig. 5 is an explanatory figure of a deformed state of the cushion member 2;
Fig. 6 shows sections of cushion members 5, 6, 7 and 8 of embodiments;
Fig. 7 is an explanatory figure of a cushion member 9 of an embodiment;
Fig. 8 is an explanatory figure showing a section of a cushion member 10 of an embodiment;
Fig. 9 is a front elevation of a cushion member 13 of prior art attached to the jacking-pipe 1;
Fig. 10 is a section of the jointed portion of the jacking-pipes 1;
Fig. 11 is an explanatory diagram of the jointed portion of the jacking-pipes 1 in curved jacking;
Fig. 12 is an explanatory diagram of a shearing stress generated at the end faces of the jacking-pipes 1;
Fig. 13 is a perspective view of the extrusion-molding product 20;
Fig. 14 is an explanatory diagram of an extrusion molding of the cushion member;
Fig. 15 is an explanatory diagram of an extrusion molding of the cushion member; and
Fig. 16 is an explanatory diagram of an extrusion molding of the cushion member.

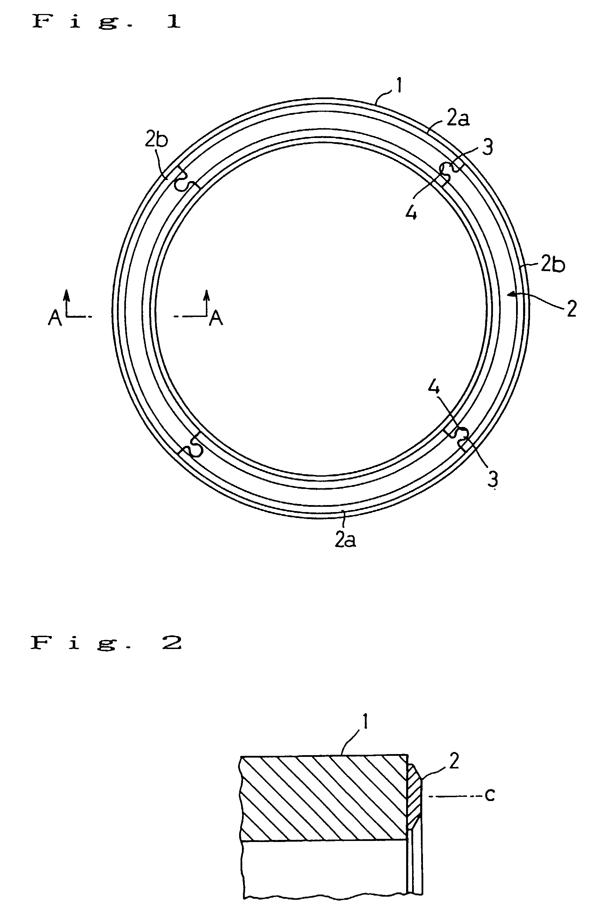

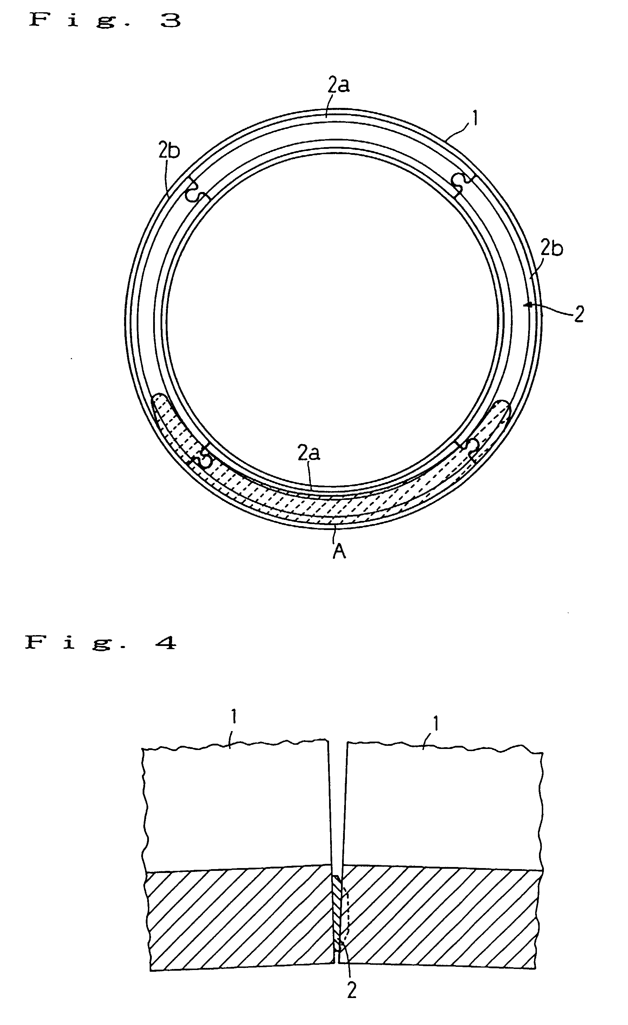

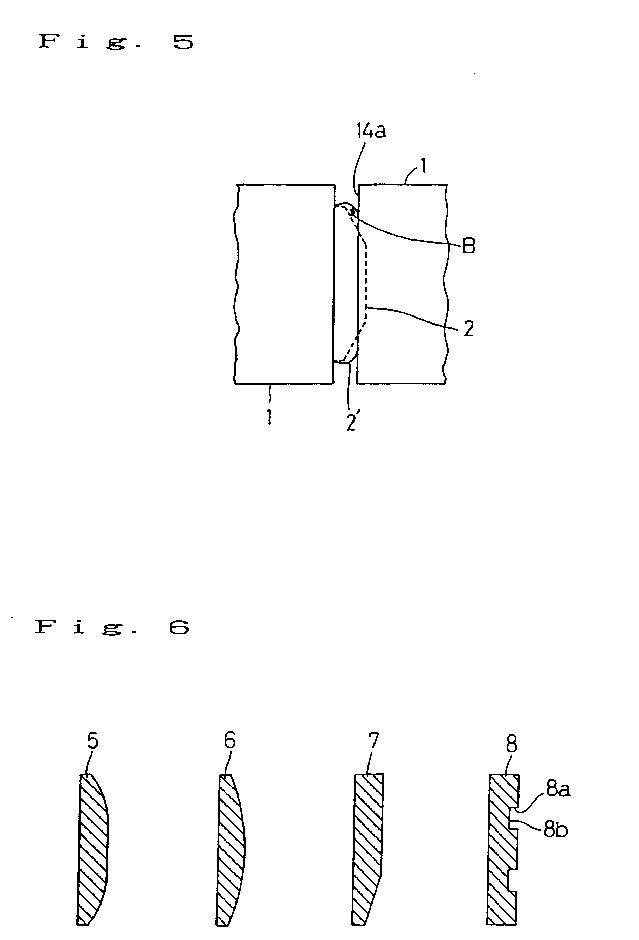

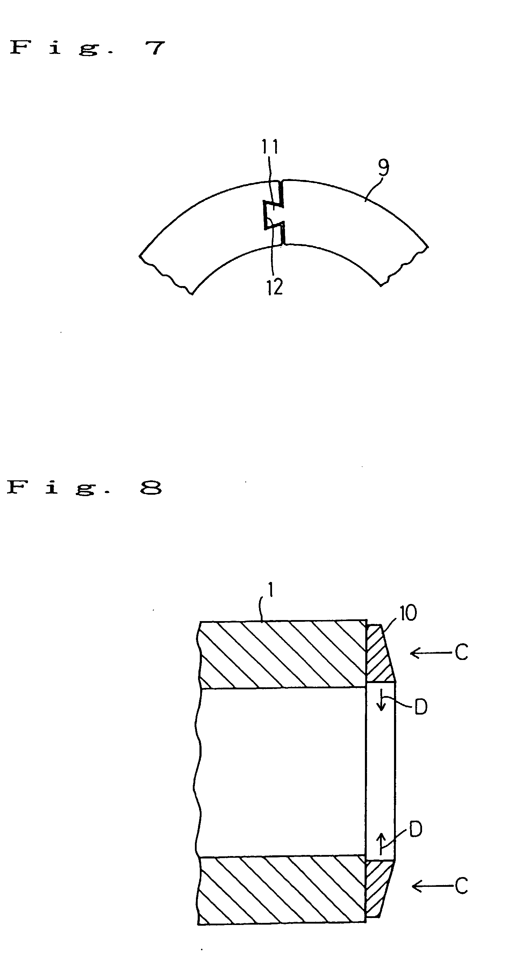

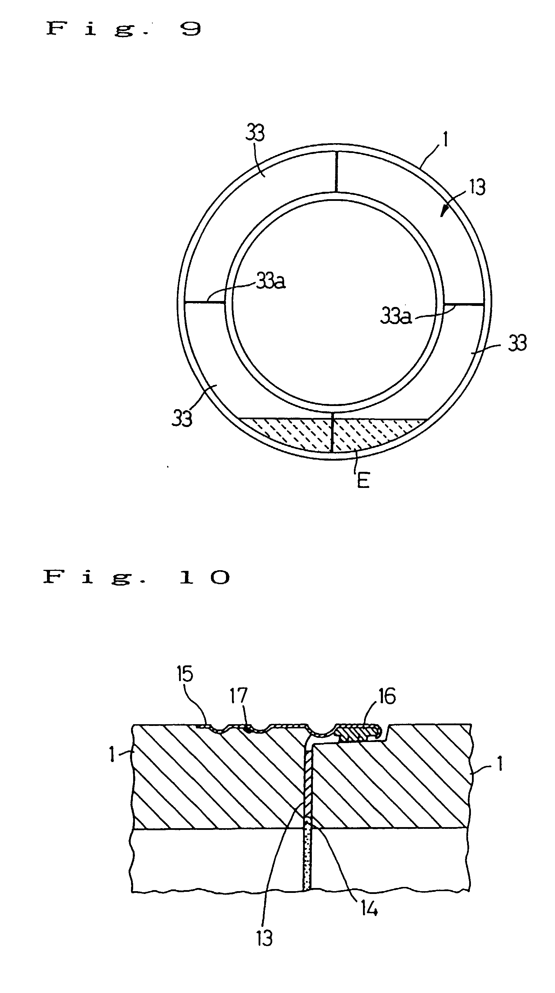

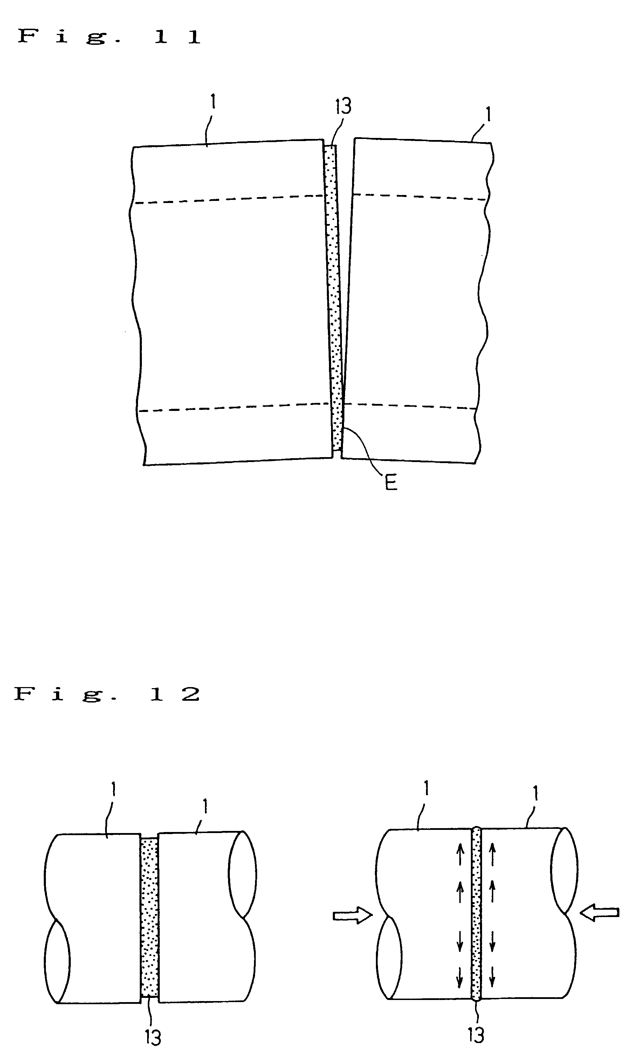

The cushion member 2, as shown in Fig. 1, is formed into a circular shape by joining four arcuate members 2a and 2b which are obtained by quartering a circle and is joined and mounted to the joint end face of the jacking-pipe 1 with adhesive. On one end portion of each of the arcuate member 2a and 2b, there is formed a ridge 3 which is bulged at its leading end portion. On the other end portion, there is formed a groove 4 which is so shaped as to correspond to the ridge 3. When these ridge 3 and groove 4 are fitted, therefore, the arcuate members are integrated by the engagement between the ridge 3 and the groove 4. The shapes of the ridge and the groove should not be limited to those shown in Fig. 1 but may be modified into trapezoid ridge 11 and groove 12, like the cushion member 9 shown in Fig. 7. In short, the ridge and the groove are so shaped that they hardly come out when engaged.

The arcuate members 2a and 2b shown in Fig. 1 are made of foamed vinyl chloride. The two arcuate members 2a are arranged vertically symmetrically with respect to the center whereas the two arcuate members 2b are arranged horizontally symmetrically with respect to the center. The arcuate members 2a are given an expansion ratio of 2.9 whereas the arcuate members 2b are given an expansion ratio of 2.0, so that the arcuate members 2a are softer. The arcuate members arranged symmetrically with respect to the center have desirably the same softness. Otherwise, the deformation of the cushion member may become uneven, when the straight pipe-jacking is performed under a compression, causing an angle at the joint portion of the jacking-pipe and the straight jacking may come to impasse. Since this jacking-pipe 1 is for the curved pipe-jacking downward, it is jointed at an angle, as shown in Fig. 4, so that the compressive deformation of the cushion member becomes the largest at the lowermost portion. In other words, the softer arcuate members 2a are attached to the lower side where the compressive deformation is the largest, and on the upper side at the symmetrical position.

In curved pipe-jacking, as shown in Fig. 11, moreover, the softest arcuate member is arranged at the lower side portion where the compressive deformation of the cushion member is the largest or where the end faces of the jacking-pipes to be jointed are the closest to each other, so that the portion is easily deformable to reduce the stress generated, and increase of the deformation of the cushion member bring about expansion of the contact area between the cushion member and the end faces of the jacking-pipes jointed, the area through which the compressive force is transmitted so that an excessive concentration of stress can be suppressed to prevent the joint portion of the jacking-pipes from being broken. If curved jacking is to be performed horizontally, the softer arcuate members are arranged horizontally.

The cushion member 2 is sloped on its inner and outer circumferential sides, and is thinner in its sectional shape towards the edge portions, as shown in Fig.2. With this shape of the cushion member 2, as shown in Fig. 5, the shearing stress by the Poisson's ratio is suppressed when the compressive deformation is caused by jacking. In Fig. 5, the cushion member 2 before being deformed is shown by dotted line whereas the cushion member 2' after being deformed is shown by solid line. The cushion member is deformed when its tip portion, the right-hand side of the cushion member, comes into contact with the end face 14a of a mating jacking-pipe la. Since the cushion member 2 is thinner at its tip portion than at its root end, however, the tip portion is free to be relieved and deformed outward, as indicated by arrow B, so that the shearing stress rarely occurs at the end faces of the jacking-pipes.

Moreover, the cushion member 2 is so shaped as to enlarge the area for transmitting the compressive force in the curved jacking, namely, the area of contact between the cushion member and the end faces of the jacking-pipes jointed, thereby to suppress the excessive concentration of stress and to prevent the jointed portion of the pipes from being broken. In curved jacking, the jacking-pipes are jointed at an inclination, as shown in Fig. 4. In this instance, the compressed and deformed portion of the cushion member 2, namely the portion shown by broken line, is the narrow, or short in width and easily deformable portion. As a result, the deformation of the cushion member 2 increases to enlarge the contact area between the cushion member and the end faces of the jacking-pipes as shown there. The compressive stress is proportional to the strain of the cushion member, but no portion having an especially high strain is in the shape of the cushion member of the invention. The excellence of the cushion member is clear when compared with the cushion member of the prior art where the compressive stress is concentrated on the lowermost end as seen from Figs. 9 and 11.

Fig.8 shows the cushion member 10 of the embodiment. This cushion member 10 is given a trapezoid section having a slope and having a larger thickness on its inner side and a smaller thickness on its outer side. When the pipes are jointed at an inclination in the case of curved jacking, with this sectional shape, too, the contact area between the cushion member and the end faces of the jacking-pipes jointed together can be enlarged, to suppress the concentration of stress. However, this cushion member 10 is rather inadequate for use for straight jacking. This is because an inward force D is generated in the cushion member 10 when a pushing force C is applied in the case of straight jacking, and the cushion member tends to protrude into the pipe if the adhesion is weak. In the case of the cushion member 2 in Fig. 2, however, such an inward force is not generated because it is sectionally thinner toward the edge portions. The cushion member 2 is far from being subjected to such an inward force at all because it is symmetric with respect to the center line c, as shown in Fig. 2.

In the cushion member 2, the distribution of the compressive stress generated in it, the portion for transmitting the jacking force in curved jacking is in a far wider area A shown by dotted lines in Fig. 3, than the area E shown by dotted lines in Fig 9 of prior art, so that the concentration of stress can be relaxed to prevent the damage to the jointed portion of the pipes.

The sectional shape of the cushion member of the invention is not limited to that of the cushion member 2. Fig. 6 shows other examples of the sectional shape of the cushion member. The cushion member 5 is curved at its two ends, and the cushion member 6 is curved all over its outer face. Both of these cushion members are sectionally shaped to have smaller thicknesses toward the two end portions so that they can have effects similar to those of the foregoing cushion member 2. The cushion member 7 is shaped to have only one tapered end while being left flat from the central portion to the other end. This shape can also reduce the shearing force by the Poisson's ratio. If a tapered portion is formed on the outer circumferential side, the concentration of stress in the case of the curved jacking can be suppressed. The flatness from the center to the other end of the shape generates no inward force, so that it can also preferably employed for straight jacking. The cushion member 8 is shaped to have a stepped portion 8a and a groove 8b. This shape can also reduce the shearing force by the Poisson's ratio.

In the foregoing embodiments, the cushion member used comprises four arcuate members, but six or eight divided arcuate members may naturally be employed by jointing them with joints described above.

Numeral 20 shown in Fig. 13 is a product by an extrusion-molding of a plastic material. This makes it possible to manufacture the cushion members having a variety of sectional shapes as shown in Fig. 6 easily. Cushion members having various hardness can also be obtained because the expansion ratio can be freely selected. The extrusion-molding product 20 can be cut out into a suitable shape of the cushion member, as shown in Fig.1, but only having one joint, and it is stuck to the joint end face of the jacking-pipe. Since the cushion member having a larger diameter can be easily manufactured by means of the extrusion molding, by cutting out one turn of the product and making one joint even when for the jacking-pipe of a large diameter, the use of the cushion member composed of a plurality of arcuate members and having many joints can be avoided.

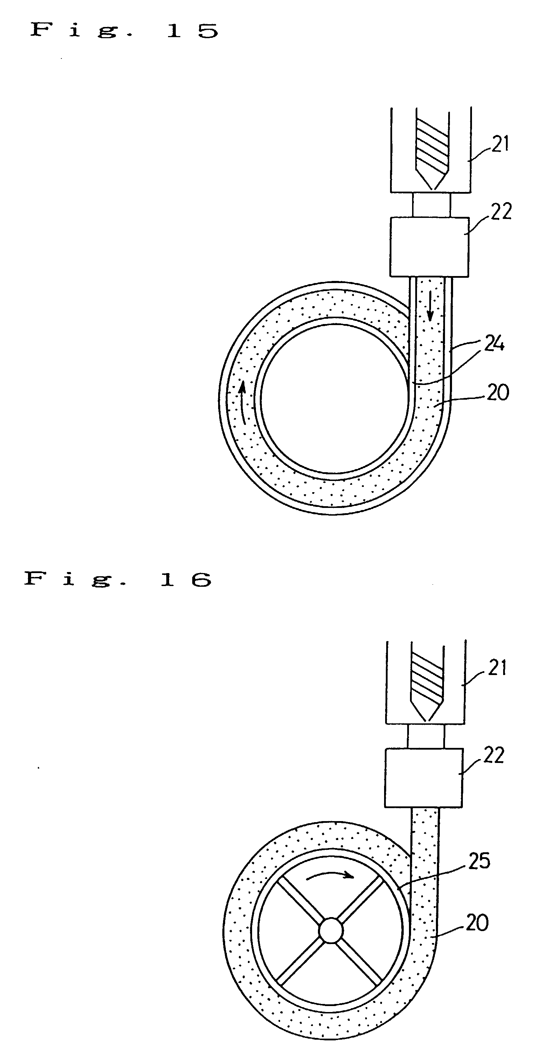

Figs. 14, 15 and 16 show examples of manufacturing method of the cushion member by way of the product by the extrusion molding. In each of those figures, the material is put into an extruder 21, melted and forcedly sent to a die 22 by means of screw and is regulated in its shape by the not-shown sizing apparatus and is suitably cooled by a cooling apparatus.

In the manufacturing method shown in Fig. 14, the extrusion molding is performed by making the outflow speed 23 of the material different at the right and left sides. As a result, the extrusion-molding product 20 is naturally curved into a helical shape and is wound by a not-shown winding machine. Cushion members having a variety of diameters can be produced from this material by adjusting the difference between the right and left outflow speeds properly.

In the manufacturing method shown in Fig. 15, when a plastic material is melted and extrusion-molded, the outflow speed from the die is equalized in the withdwise direction of the extrusion molding. However, the extrusion-molding product 20 is then bent through a bending guide 24. The bending guide 24 can bend the extrusion-molding product 20 into a circular shape and is also equipped with a cooling apparatus so that the extrusion-molding product 20 can be bent while being cooled, passing through the bending guide 24. The extrusion-molding product 20 thus helically molded is wound by a not-shown winding machine.

By the manufacture method shown in Fig. 16, the extrusion-molding product 20 from the die 22, is helically bent by being wound on a rotating drum 25.

In the cushion member of the invention, the weak point of the joint has been eliminated and the resistance to an external force more than raised, so that the cushion member is almost free from any detrimental deformation. Since the shearing stress is hardly caused by the Poisson's ratio, the pipe end face can be prevented from being broken by the shearing force. Moreover, an excessive stress is curved jacking can be kept in check to prevent the breakage of the pipe joint.

The cushion member of the invention is manufactured at an advantageous cost by extrusion-molding a plastic material without producing any waste of material, unlike punching manufacture. Moreover, even a cushion member having a large diameter can be freely manufactured, so that the cushion member of the present invention can without regard to its diameter size, have only one joint. Moreover, in the present invention, the cushion members having not only planar but also various sectional shapes are easily manufactured adopting manufacturing method of extrusion-molding.

## Claims

1. A cushion member for mounting on the end face of a jacking-pipe characterised in that the cushion member has a joint between two ends which is composed of a ridge provided at one end and a groove corresponding to the ridge at the other end.

2. A cushion member for mounting on the end face of a jacking-pipe characterized in that the cushion member consists of a plurality of arcuate members of different hardness.

3. A cushion member for mounting on the end face of a jacking-pipe characterized in that the cushion member consists of a plurality of arcuate members formed into a circular shape with joints and the structure thereof is that one end of each of the arcuate members has a ridge and the other end has a groove which corresponds to and receives said ridge, engaging the ridge with the groove, such that the component arcuate members may be joined together to form a circular band conforming to the end face of said jacking-pipe.

4. A cushion member for according to claim 2 characterized in that the cushion member consists of a plurality of arcuate members formed into a circular shape with joints and the structure thereof is that one end of each of the arcuate members has a ridge and the other end has a groove which corresponds to and receives said ridge, engaging the ridge with the groove, such that the component arcuate members may be jointed together to form a circular band conforming to the end face of said jacking-pipe.

5. A cushion member for mounting the end face of a jacking-pipe characterized in that at least one side of the faces of the cushion member is uneven by having a slope, a groove or a stepped portion.

6. A cushion member according to claim 5, characterized in that the thickness of the face in the axial section thereof is thinner towards both ends.

7. A cushion member according to claim 5, characterized in that the thickness of the face in the axial section thereof is thinner towards one end as against the center and the other end portion.

8. A cushion member according to claim 7, characterized in that the thinner portion is located on the outer circumferential end.

9. A cushion member according to claim 4, characterised in that the sectional face in the axial direction is a trapezoid, having a thickness decreasing from one end to the other end.

10. A cushion member according to any of claims 1, 2, 3 or 4, characterized in that at least one side of faces thereof is uneven by having a slope, a groove or a stepped portion and so forth.

11. A cushion member according to claim 10, characterized in that the both end portions in the sectional face thereof in the axial direction are thinner towards the ends.

12. A cushion member according to claim 10, characterized in that one end portion in the sectional face thereof in the axial direction is thinner towards the end as against the center and the other end portion.

13. A cushion member according to claim 12, characterized in that the thinner end portion is located on the outer circumferential side.

14. A cushion member according to claim 10, characterized in that the sectional face in the axial direction is a trapezoid having a thickness decreasing from one end to the other end.

15. A cushion member for mounting on a jacking-pipe, characterized in that the cushion member is cut and shaped out of a long helical or ring shape band made by extrusion molding and accordingly has only one joint and a material of a single substance of plastic, rubber or elastomer, or of their compound is used in the extrusion molding.

16. A jacking-pipe including a cushion member according to any of claims 1 to 15 mounted on an end face.

17. A jacking-pipe according to claim 16 where dependent in claim 3 characterized in that the softest arcuate cushion member softer arcuate cushion members are arranged and disposed at the portion of the end face of the jacking-pipe where the greatest compressive deformation of the cushion member or members occurs during curved jacking.

18. A method for making a cushion member according to any of claims 1 to 15 wherein a helical or ring-shaped band is made by extrusion molding and then cut and/or shaped accordingly.
